# EUROPEAN PATENT APPLICATION

(11) **EP 4 765 346 A1**
(43) Date of publication of application: **24.06.2026**
(21) Application number: 25816221.3
(22) Date of filing: 28.05.2025
(51) Int. Cl.: H01M 10/658, H01M 10/613, H01M 10/625, H01M 10/647, H01M 10/42, H01M 10/6552

(54) **BATTERY DEVICE**

(30) Priority: 31.05.2024 KR 20240071340
(71) Applicant: LG Energy Solution, Ltd., Seoul 07335 (KR)
(72) Inventor: PARK, Jeong Hoon, Daejeon 34122 (KR); SHIN, Ju Hwan, Daejeon 34122 (KR)
(74) Representative: Plasseraud IP
(86) International application number: PCT/KR2025/007250
(87) International publication number: WO 2025/249901

(57) **Abstract**

Disclosed herein relates to a battery device including: a first frame; a plurality of battery cells provided on the first frame; and a side pad disposed between the plurality of battery cells, wherein the side pad includes: an outer body in contact with the plurality of battery cells; an inner body provided within an internal space of the outer body; and a thermally expandable layer extending along the inner body and containing a thermally expandable material.

## Description

### [Technical Field]

The present disclosure relates to a battery device.

This application claims the benefit of Korean Patent Application No. 10-2024-0071340, filed on May 31, 2024, the disclosure of which is incorporated herein by reference.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the range of battery electric vehicles (BEVs) has increased to levels comparable to fuel vehicles, the primary use of secondary batteries is shifting from mobile devices to mobility.

As secondary batteries are used in mobility applications, the demand for their safety has increased. If accidents such as fires occur in secondary batteries used in mobility, the life of the driver can be endangered. Therefore, research on technologies to enhance the safety of secondary batteries is indispensable.

### [Summary]

### [Technical Problem]

The technical problem addressed by the present disclosure is to provide a battery device.

### [Technical Solution]

To solve the aforementioned problem, the technical concept of the present disclosure provides a battery device including: a first frame; a plurality of battery cells provided on the first frame; and a side pad disposed between the plurality of battery cells, wherein the side pad includes: an outer body in contact with the plurality of battery cells; an inner body provided within an internal space of the outer body; and a thermally expandable layer extending along the inner body and containing a thermally expandable material.

In exemplary embodiments, the outer body includes a pair of side walls, the inner body extends between the pair of side walls of the outer body.

In exemplary embodiments, the outer body and the inner body include the same metal.

In exemplary embodiments, the thermally expandable material includes expandable graphite.

In exemplary embodiments, the battery device further includes a first thermally conductive adhesive layer attaching the plurality of battery cells to the first frame.

In exemplary embodiments, the battery device further includes a first thermally conductive adhesive layer attaching the plurality of battery cells to the first frame, wherein a bottom wall of the outer body facing the first thermally conductive adhesive layer includes a through hole communicating with the inner space of the outer body.

In exemplary embodiments, the inner body includes a plurality of holes.

In exemplary embodiments, the thermally expandable layer has a mesh structure.

In exemplary embodiments, the thermally expandable layer extends further along an inner surface of the outer body.

In exemplary embodiments, the first frame includes a cooling channel configured to allow a cooling fluid to flow.

In exemplary embodiments, the battery device further includes a second frame provided on the plurality of battery cells, wherein the side pad includes an extending part connected to the second frame.

In exemplary embodiments, the battery device further includes a second thermally conductive adhesive layer provided between the second frame and the extending part of the side pad, and attaching the extending part of the side pad to the second frame.

In exemplary embodiments, the second frame includes a cooling channel configured to allow a cooling fluid to flow.

### [Advantageous Effects]

According to the battery device of the exemplary embodiments of the present disclosure, since a side pad configured to dissipate heat is disposed between the battery cells, the cooling performance for the battery cells can be improved.

According to the battery device of the exemplary embodiments of the present disclosure, the side pad disposed between the battery cells includes a thermally expandable layer containing a thermally expandable material, thereby preventing or suppressing the transfer of heat generated in a battery cell where a thermal event has occurred to other battery cells. Since heat transfer between battery cells and chain ignition of battery cells can be prevented or suppressed, the safety and reliability of the battery device can be improved.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a cross-sectional view illustrating a battery device according to exemplary embodiments of the present disclosure.
FIG. 2 is an enlarged view of the area indicated by "II" in FIG. 1.
FIG. 3 is a cross-sectional view showing a battery device in which a thermal event has occurred.
FIG. 4 is a cross-sectional view showing a portion of a battery device according to exemplary embodiments of the present disclosure.
FIG. 5 is a cross-sectional view showing a battery device where a thermal event has occurred.
FIG. 6 is a cross-sectional view showing a portion of a battery device according to exemplary embodiments of the present disclosure.
FIG. 7 is a cross-sectional view showing a portion of a side pad according to exemplary embodiments of the present disclosure.
FIG. 8 is a cross-sectional view showing a portion of a battery device according to exemplary embodiments of the present disclosure.
FIG. 9 is a cross-sectional view showing a portion of a battery device according to exemplary embodiments of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

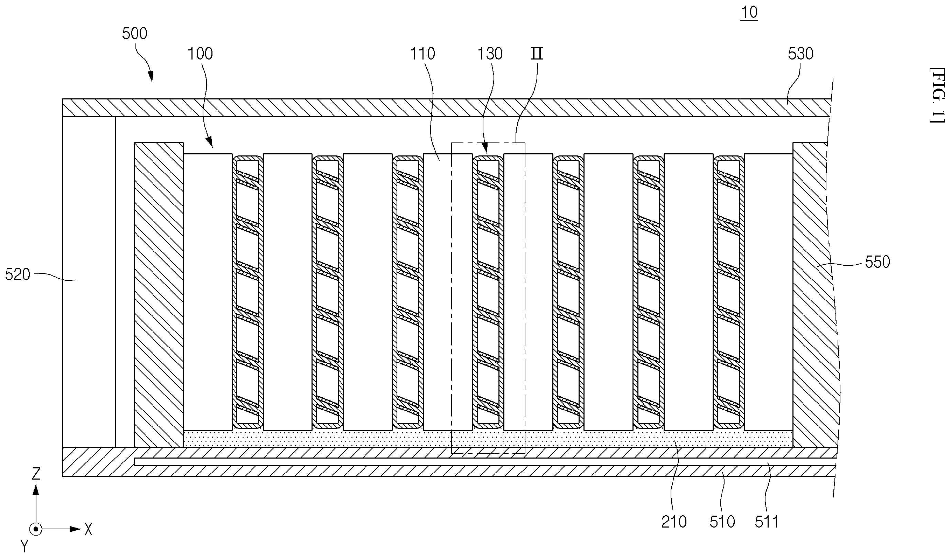

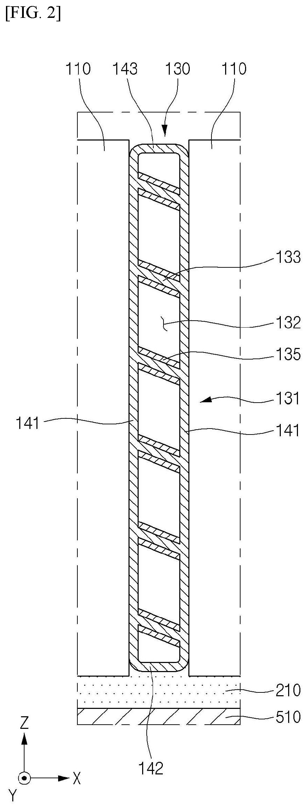

FIG. 1 is a cross-sectional view showing a battery device 10 according to exemplary embodiments of the present disclosure. FIG. 2 is an enlarged view showing the area indicated by "II" in FIG. 1.

Referring to FIGS. 1 and 2, the battery device 10 may include a housing 500 and a cell assembly 100. The battery device 10 may correspond to a battery pack or a battery module.

The housing 500 may provide an internal space for accommodating the cell assembly 100. The internal space of the housing 500 may accommodate one or more cell assemblies 100. The housing 500 may include a base frame 510, a side frame 520, a top frame 530, and a plurality of inner frames 550.

The base frame 510 may support the cell assembly 100. The base frame 510 may have a plate-like form extending in a first horizontal direction (e.g., X-direction) and a second horizontal direction (e.g., Y-direction). A plurality of cell assemblies 100 arranged in the first horizontal direction (e.g., X-direction) and the second horizontal direction (e.g., Y-direction) may be provided on the base frame 510.

The base frame 510 may include cooling channels 511 configured for cooling fluid to flow. Cooling fluid supplied from outside the base frame 510 may be supplied to the inlet of the cooling channel 511, flow along the cooling channel 511, and be discharged to the outside through the outlet of the cooling channel 511. Cooling fluid flowing through the cooling channel 511 can cool the cell assembly 100. The cooling fluid may include coolant and/or refrigerant. The housing 500 may be equipped with a pipe configured to deliver the cooling fluid to the cooling channel 511 of the base frame 510. Externally supplied cooling fluid may be delivered through the pipe to the cooling channel 511 of the base frame 510.

The side frame 520 may extend around the perimeter of the base frame 510 and may enclose the cell assembly 100.

A top frame 530 may be fastened to the top of the side frame 520 to cover a plurality of cell assemblies 100. The top frame 530 may have a plate-like configuration extending in a first horizontal direction (e.g., X-direction) and a second horizontal direction (e.g., Y-direction). The top frame 530 may be spaced apart from the cell assembly 100 in a vertical direction (e.g., Z-direction).

A plurality of inner frames 550 may compartmentalize the internal space of the housing 500 into a plurality of accommodation spaces. One or more cell assemblies 100 may be disposed in each of the plurality of accommodation spaces of the housing 500 defined by the plurality of inner frames 550. In exemplary embodiments, the plurality of inner frames 550 may be spaced apart from each other in a first horizontal direction (e.g., X-direction), and each individual inner frame 550 may extend in a second horizontal direction (e.g., Y-direction). A single cell assembly 100 may be disposed between a pair of inner frames 550. Each inner frame 550 may contact the side surface of the cell assembly 100.

The cell assembly 100 may be mounted on the base frame 510. The cell assembly 100 may include a plurality of battery cells 110 and a plurality of side pads 130.

Each battery cell 110 is a lithium-ion battery, i.e., the basic unit of a secondary battery. Each battery cell 110 may include an electrode assembly, an electrolyte, and a cell case. The electrode assembly embedded within the cell case may include a positive electrode, a negative electrode, and a separator interposed between the positive and negative electrodes. The electrode assembly may be either a jelly-roll type or a stack-type, depending on its assembly form. A jelly-roll type electrode assembly may include a wound structure including a positive electrode, a negative electrode, and a separator interposed between them. A stack-type electrode assembly may include a plurality of positive electrodes, a plurality of negative electrodes, and a plurality of separators interposed between them, stacked sequentially. The positive electrode may include a positive electrode current collector and a positive electrode active material. The negative electrode may include a negative electrode current collector and a negative electrode active material.

Each battery cell 110 may correspond to a pouch-type battery cell, a cylindrical battery cell, or a prismatic battery cell. The electrode assembly of a pouch-type battery cell is embedded within a pouch case including an aluminum laminate sheet. The electrode assembly of a cylindrical battery cell is embedded within a cylindrical metal can. The electrode assembly of a prismatic battery cell is embedded within a prismatic metal can.

The plurality of battery cells 110 provided in the cell assembly 100 may be connected in series and/or parallel. For example, the plurality of battery cells 110 may be connected in series with each other. For example, the plurality of battery cells 110 may also be connected in parallel with each other. For example, when defining a set of two or more battery cells 110 connected in parallel as a bank, one bank composed of two or more battery cells 110 connected in parallel and another bank composed of two or more battery cells 110 connected in parallel may be connected in series.

In exemplary embodiments, the plurality of battery cells 110 provided in the cell assembly 100 may be arranged in a first horizontal direction (e.g., X-direction), and each battery cell 110 may extend in a second horizontal direction (e.g., Y-direction). An electrode lead may be provided on at least one of the two ends of each battery cell 110 along the second horizontal direction (e.g., Y-direction). The electrode leads of adjacent battery cells 110 among the plurality of battery cells 110 may be electrically and physically connected to each other.

The cell assembly 100 may include a busbar frame connected to the sides of the plurality of battery cells 110. The busbar frame may be disposed at each of the two ends along the second horizontal direction (e.g., Y-direction) of the cell assembly 100. The busbar frame may support the busbars and the electrode leads of the battery cells 110. The busbars may be electrically and physically connected to at least one of the electrode leads of the plurality of battery cells 110. The busbars may be coupled to at least one of the electrode leads of the plurality of battery cells 110 by welding.

A plurality of side pads 130 may be disposed on the base frame 510 and arranged in a first horizontal direction between a pair of inner frames 550. Each of the plurality of side pads 130 may contact the side surface of a corresponding battery cell 110 among the plurality of battery cells 110. The plurality of side pads 130 may be spaced apart from each other in a first horizontal direction (e.g., X-direction) with at least one battery cell 110 interposed between them. At least one battery cell 110 may be disposed between any two adjacent side pads 130. The side pad 130 may have a plate-like shape extending continuously in a second horizontal direction (e.g., Y-direction) and a vertical direction (e.g., Z-direction). At least one of the two side surfaces of the side pad 130 may contact the battery cell 110. The side pad 130 may be attached to the corresponding battery cell 110 by an adhesive member such as double-sided tape or adhesive.

Each side pad 130 may support the corresponding battery cell 110 in the first horizontal direction. Each side pad 130 may support the corresponding battery cell 110 in the first horizontal direction, thereby suppressing or preventing deformation of the battery cell 110.

The side pad 130 may include an outer body 131 and an inner body 133.

The outer body 131 may form the exterior appearance of the side pad 130 and may provide an internal space 132. The outer body 131 may include a pair of side walls 141 facing in the first horizontal direction, a bottom wall 142 facing the base frame 510, and an upper wall 143 facing the top frame 530. The pair of side walls 141 of the outer body 131 may each have a plate-like form extending continuously in a second horizontal direction (e.g., Y-direction) and a vertical direction (e.g., Z-direction). One of the pair of side walls 141 of the outer body 131 may contact a battery cell 110 on one side of the side pad 130, and the other of the pair of side walls 141 may contact a battery cell 110 on the other side of the side pad 130. The bottom wall 142 may be connected to the lower end of each of the pair of side walls 141, and the upper wall 143 may be connected to the upper end of each of the pair of side walls 141. The outer body 131 may include a material with excellent thermal conductivity, and in this disclosure, the outer body 131 may be referred to as a thermally conductive outer body.

The inner body 133 may be provided within the internal space 132 of the outer body 131. The inner body 133 may have a flat plate shape extending between the pair of side walls 141 of the outer body 131. The pair of side walls 141 of the outer body 131 are supported by the inner body 133, thereby enhancing the rigidity of the side pad 130. In exemplary embodiments, the side pad 130 may include a plurality of inner bodies 133 spaced apart vertically from one another. The inner bodies 133 may contain a material with excellent thermal conductivity, and in this disclosure, the inner bodies 133 may be referred to as thermally conductive inner bodies.

The side pad 130 may be thermally coupled to a corresponding battery cell 110. Heat generated from the battery cell 110 can be dissipated through the outer body 131 and inner body 133 of the side pad 130. Since the side pad 130, configured to dissipate heat between the battery cells 110, is disposed, the cooling performance for the battery cells 110 can be improved.

The outer body 131 and inner body 133 of the side pad 130 may include a material with excellent thermal conductivity, such as a metal. For example, the side pad 130 may include aluminum, silver, gold, copper, tungsten, or a combination thereof. In exemplary embodiments, the outer body 131 and the inner body 133 may include the same material or the same metal. In exemplary embodiments, within each side pad, the outer body 131 and the inner body 133 may be formed integrally with each other to form a single integrated structure. In some exemplary embodiments, the material of the outer body 131 and the material of the inner body 133 may be different from each other.

The side pad 130 may include a thermally expandable layer 135 provided within an internal space 132 of the outer body 131. The thermally expandable layer 135 may include a thermally expandable material. The thermally expandable material may be fire-resistant and configured to expand in volume above a specific temperature. When a thermal event, such as ignition and/or thermal runaway of a battery cell 110, occurs within the battery device 10, the thermally expandable material of the thermally expandable layer 135 expands. The expanded thermally expandable material can form an insulating layer to thermally isolate the battery cell 110 where the thermal event occurred from other battery cells 110.

In exemplary embodiments, the thermally expandable layer 135 may be applied onto a surface of the inner body 133. The thermally expandable layer 135 may extend conformally along the surface of the inner body 133. The thermally expandable layer 135 may cover the surface of the inner body 133 in whole or in part.

In exemplary embodiments, the thermally expandable material of the thermally expandable layer 135 may include expandable graphite, vermiculite, or a combination thereof. In exemplary embodiments, the thermally expandable layer 135 may include a base layer and thermally expandable particles contained within the base layer. The base layer may be composed of a polymer, such as polyurethane or silicone. The thermally expandable particles may be particles or capsules containing the thermally expandable material.

In exemplary embodiments, the thermally expandable material in the thermally expandable layer 135 may be configured to expand in volume by a factor of 10 to 50 times upon exceeding an expansion initiation temperature. The expansion initiation temperature may be 100°C or higher, 200°C or higher, 300°C or higher, 400°C or higher, or 500°C or higher.

A first thermally conductive adhesive layer 210 may be disposed between the base frames 510 of the cell assembly 100. The first thermally conductive adhesive layer 210 may attach a plurality of battery cells 110 to the base frames 510. The upper part of the first thermally conductive adhesive layer 210 may be in direct contact with each of the plurality of battery cells 110, and the lower part of the first thermally conductive adhesive layer 210 may be in direct contact with the base frame 510. The first thermally conductive adhesive layer 210 can thermally couple each of the plurality of battery cells 110 to the base frame 510. The first thermally conductive adhesive layer 210 may include a thermal resin and/or a thermal interface material.

Furthermore, the first thermally conductive adhesive layer 210 may contact the bottom wall 142 of the outer body 131 of the side pad 130, thermally and physically coupling the side pad 130 to the base frame 510. In exemplary embodiments, the outer body 131 of the side pad 130 may be thermally coupled to the base frame 510 by the first thermally conductive adhesive layer 210, and heat generated within the battery cell 110 may be transferred to the base frame 510 through the side pad 130.

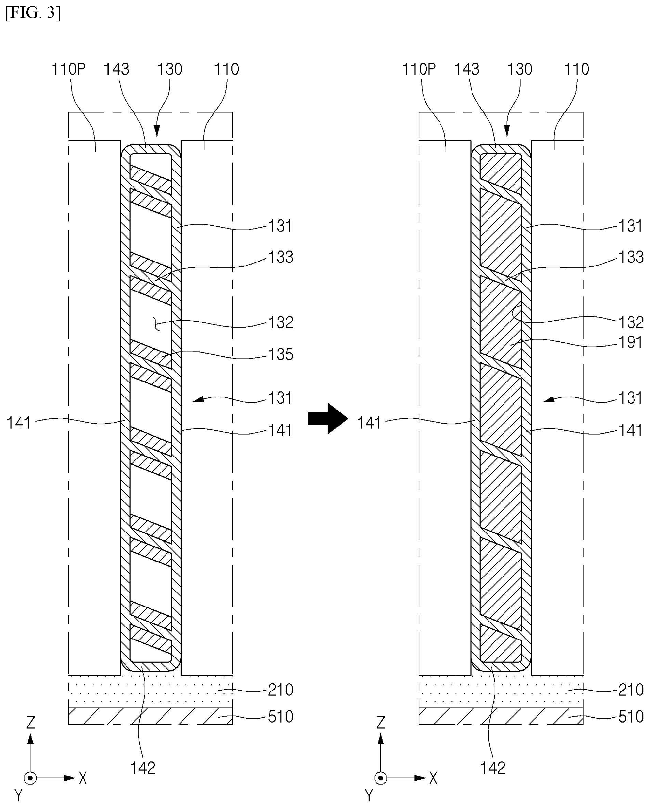

FIG. 3 is a cross-sectional view showing a battery device 10 where a thermal event has occurred.

Referring to FIG. 3, when a thermal event, such as ignition of the battery cell 110, occurs in the battery device 10, the thermally expandable material in the thermally expandable layer 135 of the side pad 130 surrounding the battery cell 110P where the thermal event occurred expands. and the expanded thermally expandable material can form an insulating layer 191 that at least partially fills the internal space 132 of the outer body 131 of the side pad 130. The insulating layer 191 can prevent or suppress the transfer of heat generated from the battery cell 110P where the thermal event occurred to other battery cells 110. Since it can prevent or suppress heat transfer between the battery cells 110 and chain ignition of the battery cells 110, it can improve the safety and reliability of the battery device 10.

### (Second embodiment)

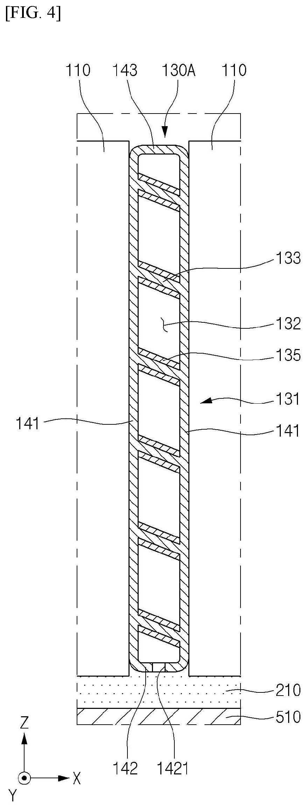

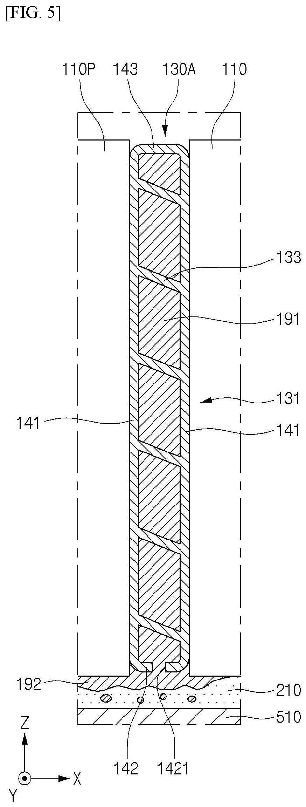

FIG. 4 is a cross-sectional view showing a portion of a battery device according to exemplary embodiments of the present disclosure. FIG. 5 is a cross-sectional view showing a battery device in which a thermal event has occurred. Hereinafter, the battery device in FIGS. 4 and 5 will be described, focusing on the differences from the battery device 10 described with reference to FIGS. 1 and 2.

Referring to FIGS. 4 and 5, the bottom wall 142 of the outer body 131 of the side pad 130A can face the first thermally conductive adhesive layer 210, and the bottom wall 142 of the outer body 131 of the side pad 130A may include a through hole 1421. The through hole 1421 provided in the bottom wall 142 of the outer body 131 may communicate with the internal space 132 of the outer body 131.

As shown in FIG. 5, when a thermal event occurs in the battery device, the thermally expandable material in the thermally expandable layer 135 of the side pad 130A surrounding the battery cell 110P where the thermal event occurred expands, and the expanded thermally expandable material can be discharged outside the outer body 131 through the through hole 1421 in the outer body 131. Furthermore, the first thermally conductive adhesive layer 210 surrounding the battery cell 110P where the thermal event occurred can thermally deform, forming voids and/or cavities, and the void and/or cavity formed by the thermal deformation of the first thermally conductive adhesive layer 210 may be filled by the expanded thermally expandable material, thereby forming an insulating layer 192. Heat transfer between the battery cell 110P where a thermal event has occurred and the base frame 510 is suppressed or blocked by the insulating layer 192, thereby preventing or inhibiting heat generated in the battery cell 110P where the thermal event occurred from transferring to other battery cells 110 via the base frame 510. Since heat transfer between the battery cells 110 and chain ignition of the battery cells 110 can be prevented or suppressed, the safety and reliability of the battery device can be improved.

### (Third embodiment)

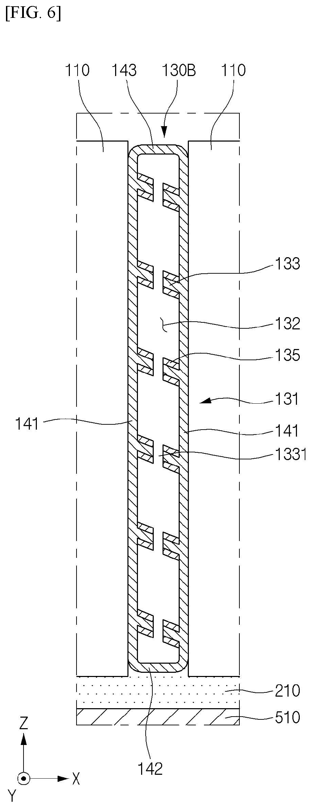

FIG. 6 is a cross-sectional view showing a portion of a battery device according to exemplary embodiments of the present disclosure. Herein, the battery device of FIG. 6 is described with a focus on the differences from the battery device 10 described with reference to FIGS. 1 and 2.

Referring to FIG. 6, the inner body 133 of the side pad 130B may include at least one hole 1331. At least one hole 1331 in the inner body 133 may vertically penetrate the inner body 133. In exemplary embodiments, the inner body 133 of the side pad 130B may include a plurality of holes 1331 arranged in a one-dimensional array or a two-dimensional array. When the thermally expandable material of the thermally expandable layer 135 expands, the expanded thermally expandable material can move vertically through the holes 1331 in the inner body 133. Because the inner body 133 has holes 1331 that allow the movement of the expanded thermally expandable material, when a thermal event occurs within the battery device, the insulating layer (see 191 in FIG. 3) that fills the internal space 132 of the outer body 131 of the side pad 130B can be formed more rapidly.

### (Fourth embodiment)

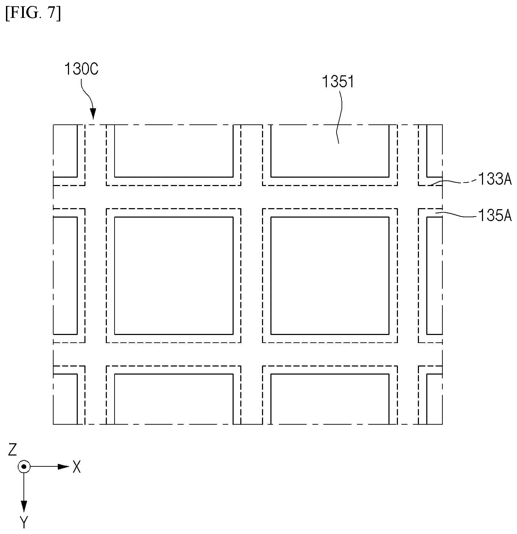

FIG. 7 is a cross-sectional view showing a portion of the side pad 130C according to exemplary embodiments of the present disclosure. Herein, the side pad 130C of FIG. 7 is described, focusing on the differences from the side pad 130 of the battery device 10 described with reference to FIGS. 1 and 2.

Referring to FIG. 7, the thermally expandable layer 135A of the side pad 130C may have a mesh structure, a net structure, or a grid structure. The thermally expandable layer 135A may include a plurality of holes 1351. The plurality of holes 1351 in the thermally expandable layer 135A may be arranged in a first horizontal direction (e.g., X-direction) and a second horizontal direction (e.g., Y-direction). When viewed in a plane, the plurality of holes 1351 in the thermal expandable layer 135A may be polygonal, such as circular or square.

In exemplary embodiments, the inner body 133A may have a mesh structure, net structure, or grid structure. The inner body 133A may include a plurality of holes. For example, the thermally expandable layer 135A of the side pad 130C may be applied to an inner body 133A having a mesh structure and may have a mesh structure corresponding to the mesh structure of the inner body 133A.

### (Fifth embodiment)

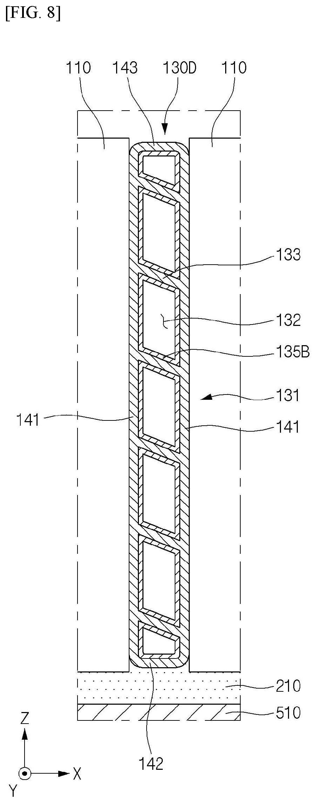

FIG. 8 is a cross-sectional view showing a portion of a battery device according to exemplary embodiments of the present disclosure. Herein, the battery device of FIG. 8 will be described, focusing on the differences from the battery device 10 described with reference to FIGS. 1 and 2.

Referring to FIG. 8, in the side pad 130D, the thermally expandable layer 135B may extend further along the inner surface of the outer body 131 defining the internal space 132. The thermally expandable layer 135B may extend conformally along the inner surface of the outer body 131. The thermally expandable layer 135B may cover the inner surface of the outer body 131 entirely or partially.

### (Sixth embodiment)

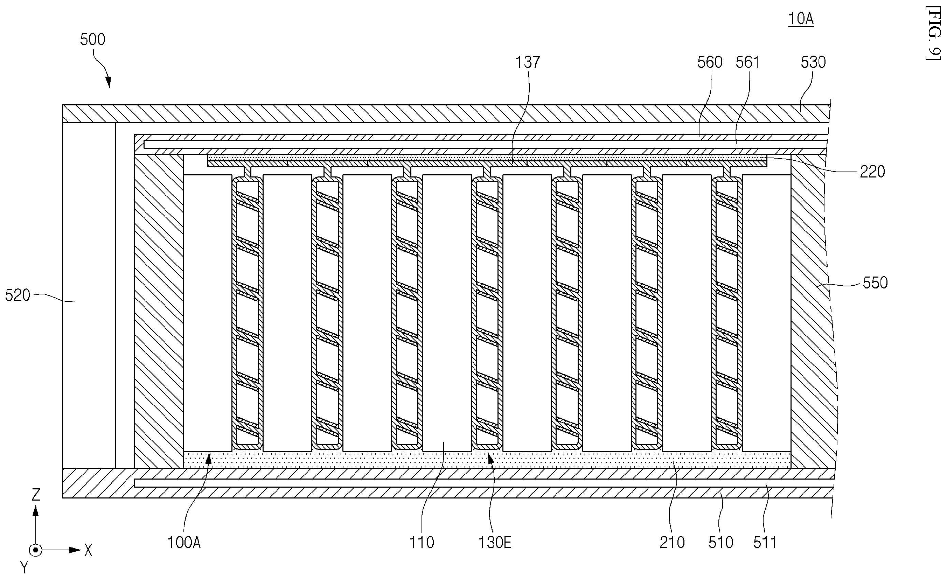

FIG. 9 is a cross-sectional view showing a portion of a battery device 10A according to exemplary embodiments of the present disclosure. Hereinafter, the battery device 10A of FIG. 9 will be described, focusing on the differences from the battery device 10 described with reference to FIGS. 1 and 2.

Referring to FIG. 9, in the battery device 10A, the housing 500 may include a cooling frame 560 disposed on the cell assembly 100A. The cooling frame 560 may be disposed on a plurality of battery cells 110 and a plurality of side pads 130E. The cooling frame 560 may include cooling channels 561 configured for cooling fluid to flow. The cooling fluid may include coolant and/or refrigerant. Externally supplied cooling fluid may flow along the cooling channels 561 of the cooling frame 560 and subsequently be discharged externally. While the cooling fluid flows through the cooling channel 561 of the cooling frame 560, cooling of the battery cells 110 may occur.

A plurality of side pads 130E may each include an extending part 137 in contact with the cooling frame 560. In each side pad 130E, the extending part 137 may extend upward from the upper wall 143 of the outer body 131. The extending part 137 may be integral with the outer body 131 and may include the same material as the outer body 131.

The plurality of side pads 130E may be coupled to the cooling frame 560 via a second thermally conductive adhesive layer 220. The second thermally conductive adhesive layer 220 may be interposed between each of the extending parts 137 of the plurality of side pads 130E and the cooling frame 560. The second thermally conductive adhesive layer 220 may extend along the extending parts 137 of the plurality of side pads 130E. The second thermally conductive adhesive layer 220 may be spaced apart from the plurality of battery cells 110 by the extending parts 137 of the plurality of side pads 130E. The upper part of the second thermally conductive adhesive layer 220 may be in direct contact with the cooling frame 560, and the lower part of the second thermally conductive adhesive layer 220 may be in direct contact with the extending parts 137 of the plurality of side pads 130E. The battery cells 110 may be thermally coupled to the cooling frame 560 via the plurality of side pads 130E and the second thermally conductive adhesive layer 220. The second thermally conductive adhesive layer 220 may include a thermal resin and/or a thermal interface material.

The present disclosure has been described in detail above with reference to the drawings and embodiments. However, the configurations described in the drawings or embodiments of the present specification are merely one embodiment of the present disclosure and do not represent all of the technical ideas of the present disclosure. Therefore, it should be understood that various equivalents and modifications may be made to the present disclosure at the time of filing this application.

## Claims

1. A battery device comprising:
a first frame;
a plurality of battery cells provided on the first frame; and
a side pad disposed between the plurality of battery cells, wherein
the side pad comprises:
an outer body in contact with the plurality of battery cells;
an inner body provided within an internal space of the outer body; and
a thermally expandable layer extending along the inner body and containing a thermally expandable material.

2. The battery device of claim 1, wherein
the outer body comprises a pair of side walls,
the inner body extends between the pair of side walls of the outer body.

3. The battery device of claim 1, wherein
the outer body and the inner body comprise the same metal.

4. The battery device of claim 1, wherein
the thermally expandable material comprises expandable graphite.

5. The battery device of claim 1, further comprising:
a first thermally conductive adhesive layer attaching the plurality of battery cells to the first frame.

6. The battery device of claim 1, further comprising:
a first thermally conductive adhesive layer attaching the plurality of battery cells to the first frame, wherein
a bottom wall of the outer body facing the first thermally conductive adhesive layer comprises a through hole communicating with the inner space of the outer body.

7. The battery device of claim 1, wherein
the inner body comprises a plurality of holes.

8. The battery device of claim 1, wherein
the thermally expandable layer has a mesh structure.

9. The battery device of claim 1, wherein
the thermally expandable layer extends further along an inner surface of the outer body.

10. The battery device of claim 1, wherein
the first frame comprises a cooling channel configured to allow a cooling fluid to flow.

11. The battery device of claim 1, further comprising:
a second frame provided on the plurality of battery cells, wherein
the side pad comprises an extending part connected to the second frame.

12. The battery device of claim 11, further comprising:
a second thermally conductive adhesive layer provided between the second frame and the extending part of the side pad, and attaching the extending part of the side pad to the second frame.

13. The battery device of claim 11, wherein
the second frame comprises a cooling channel configured to allow a cooling fluid to flow.
